# FASCICULE DE BREVET EUROPEEN

(11) **EP 3 350 062 B1**
(45) Date de publication et mention de la délivrance du brevet: **09.10.2019**
(21) Numéro de dépôt: 16756738.7
(22) Date de dépôt: 02.08.2016
(51) Int. Cl.: B62D 25/00, B62D 27/02

(54) **CAISSE DE VÉHICULE AVEC DES ÉLÉMENTS DE TÔLE ASSEMBLES PAR COLLAGE**
FAHRZEUGKAROSSERIE MIT VERKLEBTEN BLECHELEMENTEN
VEHICLE BODY HAVING ADHESIVELY BONDED SHEET METAL ELEMENTS

(30) Priorité: 18.09.2015 FR 1558828
(43) Date de publication de la demande: 25.07.2018
(73) Titulaire: PSA AUTOMOBILES S.A., 78300 Poissy (FR)
(72) Inventeur: CADET, Stephane, 70110 Les Magny (FR); BOUGNOT, Raynald, 92140 Clamart (FR)
(74) Mandataire: Fernandez, Francis Lionel
(86) Numéro de dépôt international: PCT/FR2016/052015
(87) Numéro de publication internationale: WO 2017/046464

(56) Documents cités:
- EP-B1- 1 957 554
- GB-A- 2 028 960
- US-A- 3 962 015

## Description

L'invention a trait au domaine de l'assemblage de véhicule automobile. Plus particulièrement l'invention a trait à l'assemblage de caisse de véhicule, plus particulièrement encore à l'assemblage par collage.

Une caisse de véhicule automobile comprend généralement des éléments de tôle assemblés les uns aux autres par des moyens d'assemblage du type visserie, rivets ou soudage. Les caractéristiques d'une telle caisse en termes de résistance et de rigidité dépendent généralement de la quantité de moyens d'assemblage et de la masse des éléments de tôle. La réalisation d'une telle caisse selon les normes actuelles de construction impacte le poids et le coût des véhicules.

GB-2028960 propose une feuille le de tôle renforcée par des éléments de renforts métalliques assemblés par collage à l'aide de deux colles l'une thermofusible et l'autre de type époxy, associées côte à côte pour réaliser l'assemblage.

Le document de brevet EP 1 957 554 B1 divulgue une utilisation d'une colle époxyde comme adhésif brut de montage d'éléments de tôle dans la construction automobile. Cet enseignement est intéressant en ce que la colle présente une caractéristique de résilience qui dans une utilisation pour le montage d'une caisse de véhicule peut améliorer la résistance de la caisse. Le procédé d'application de la colle nécessite cependant une application à haute température ce qui impacte le coût de l'assemblage.

L'invention a pour objectif de proposer une solution palliant au moins un inconvénient de l'état de la technique, en particulier de l'état de la technique susmentionné. Plus particulièrement, l'invention a pour objectif de proposer une solution de réalisation de caisse de véhicule automobile qui facilite son assemblage.

L'invention a pour objet une caisse de véhicule automobile, comprenant des éléments de tôles assemblés les uns aux autres, remarquable en ce que les éléments de tôle comprennent un ou plusieurs premiers éléments assemblés par de la colle thermo fusible ; et les éléments de tôle comprennent des deuxièmes éléments assemblés par de la colle élastomère. Par un premier élément, on entend que tout autre élément assemblé audit premier élément y est assemblé par de la colle thermo fusible. Par deuxième élément, on entend que le deuxième élément comprend au moins une portion assemblée à un autre deuxième élément par de la colle élastomère.

Un premier élément peut à la fois être assemblé à un ou plusieurs autres premiers éléments et/ou à un ou plusieurs autres deuxièmes éléments.

Le terme thermo fusible est généralement spécifiquement employé dans le domaine des colles. La colle thermo fusible est un matériau thermodurcissable.

Selon un mode avantageux de l'invention, les premiers éléments sont des éléments structurels de la caisse susceptibles de subir des chocs en cas de collision.

Selon un mode avantageux de l'invention, les premiers éléments sont des éléments structurels de la caisse situés à hauteur ou au-dessous des pare-chocs.

Selon un mode avantageux de l'invention, la caisse comprend un plancher et des longerons de part et d'autre, latéralement, audit plancher, les premiers éléments comprenant ledit plancher et/ou lesdits longerons.

Selon un mode avantageux de l'invention, les deuxièmes éléments comprennent une ou plusieurs portions situées à hauteur ou au-dessus des pare-chocs.

Selon un mode avantageux de l'invention, la caisse comprend un plancher et des doublures de custodes de part et d'autre, latéralement, audit plancher, les deuxièmes éléments comprenant lesdites doublures de custode.

Selon un mode avantageux de l'invention, la caisse comprend un plancher et un tablier avant à l'avant dudit plancher, les deuxièmes éléments comprenant ledit tablier avant.

Selon un mode avantageux de l'invention, la caisse comprend un plancher, des doublures de custode de part et d'autre, latéralement, audit plancher, des côtés de caisse en vis-à-vis des doublures de custode, les deuxièmes éléments comprenant lesdits côtés de caisse.

Selon un mode avantageux de l'invention, la colle thermo fusible est une colle à résines époxydes appliquée à chaud, et la colle élastomère est une colle appliquée à température ambiante.

Selon un mode avantageux de l'invention, la colle thermo fusible présente une énergie de rupture à température ambiante supérieure, préférentiellement au moins trois fois supérieure, à celle de la colle élastomère.

Selon un mode avantageux de l'invention, les longerons sont assemblés aux côtés de caisse par de la colle thermo fusible.

Selon un mode avantageux de l'invention, le plancher est assemblé au tablier avant par de la colle thermo fusible.

Selon un mode avantageux de l'invention, le tablier avant est assemblé à un élément du bloc avant du véhicule par de la colle élastomère.

Selon un mode avantageux de l'invention, la caisse comprend un pavillon s'étendant entre les côtés de caisse, ledit pavillon étant assemblé aux côtés de caisse par de la colle thermo fusible.

Selon un mode avantageux de l'invention, la colle est appliquée sur au moins un bord d'un élément destiné à être juxtaposé à un autre bord d'un autre élément de sorte à former une feuillure de jonction.

Selon un mode avantageux de l'invention, la colle est appliquée en bande de colle ou en points de colle.

Selon un mode avantageux de l'invention, les premiers éléments et/ou les deuxièmes sont, en outre, assemblés par vissage, rivetage et/ou soudage.

Les mesures de l'invention sont intéressantes en ce que la réalisation de la caisse de véhicule automobile est efficace. En effet, la caisse est assemblée au moyen de deux colles adaptées selon les éléments assemblés. L'usage de colle thermo fusible qui est onéreuse en raison des équipements de chauffage nécessaire à son application se limite à certains éléments structurels de la caisse. L'assemblage des deuxièmes éléments nécessitant une résistance inférieure est réalisé par une colle adaptée. L'usage de colle élastomère pour l'assemblage des deuxièmes éléments est avantageux par son coût, il améliore par ailleurs la rigidité de la caisse.

D'autres caractéristiques et avantages de la présente invention seront mieux compris à l'aide de la description et des dessins parmi lesquels :
- La figure 1 est une vue d'une caisse de véhicule automobile conforme à l'invention ;
- La figure 2 est une vue schématique du type de colle employée entre les éléments de tôle de la caisse de véhicule automobile de la figure 1 ;

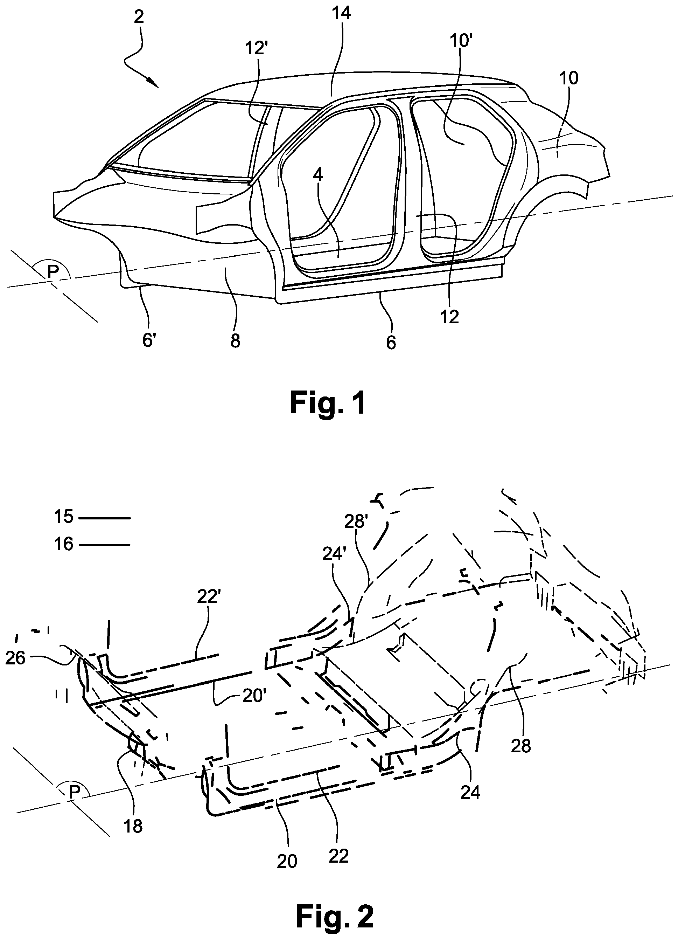

La figure 1 est une vue d'une caisse de véhicule automobile 2 conforme à l'invention. La caisse comprend des éléments de tôles assemblés les uns aux autres, elle comprend en particulier des éléments tels qu'un plancher 4, des longerons 6 et 6' de part et d'autre, latéralement, du plancher. La caisse 2 comprend également un tablier avant 8 à l'avant du plancher, des doublures de custode 10 et 10' de part et d'autre, latéralement, au plancher ainsi que des côtés de caisse 12 et 12' en vis-à-vis des doublures de custodes et liées au plancher. On peut également voir le pavillon 14 de la caisse joignant les côtés de caisse. Parmi ces éléments de tôles assemblés les uns aux autres, certains sont des premiers éléments de tôle en ce qu'ils sont assemblés par de la colle thermo fusible (non visible), d'autres éléments sont des deuxièmes éléments de tôle en ce qu'ils sont assemblés par de la colle élastomère (non visible). Par premier élément, on entend que tout autre élément assemblé audit premier élément y est assemblé par de la colle thermo fusible. Par deuxième élément, on entend que ledit élément comprend au moins une portion assemblée à un autre deuxième élément par de la colle élastomère. La caisse de véhicule automobile comprend ainsi un ou plusieurs premiers éléments qui peuvent à la fois être assemblés à un ou plusieurs autres premiers éléments et/ou à un ou plusieurs autres deuxièmes éléments. Il est a noté que l'usage de colle selon l'invention ne limite pas l'usage d'autres moyens d'assemblages des éléments de tôle du type soudage ou vissage ou rivetage. La caisse peut également être assemblée par combinaison de ces moyens avec la colle.

On peut voir un plan « P » représenté sur l'image et s'étendant horizontalement à niveau des pare choc du véhicule (non visible). Le ou les premiers éléments de la caisse peuvent être des éléments structurels situées à hauteur ou au-dessous de ce plan et qui peuvent être susceptibles de subir des chocs en cas de collision. La colle thermo fusible est en l'occurrence une colle à résines époxydes qui est appliquée à chaud sur l'élément à assembler et qui durcit par réticulation lors de son refroidissement. Une telle colle, aussi appelée par raccourci « colle époxy » présente une énergie de rupture à température ambiante qui est supérieure à celle de la colle élastomère. La colle époxy peut présenter une énergie de rupture au moins trois fois supérieure à celle de la colle élastomère. Cette mesure est intéressante pour garantir la résistance de la caisse en cas de choc au niveau de ces premiers éléments. Le plancher 4 et les longerons 6 et 6' sont en l'occurrence des premiers éléments de la caisse.

Les deuxièmes éléments peuvent être des éléments comprenant une ou plusieurs portions situées à hauteur ou au-dessus du plan « P » au niveau des pare chocs. Ces deuxièmes éléments de la caisse peuvent être soumis à des contraintes mécaniques vibratoires, et l'assemblage par colle élastomère aide à rigidifier la caisse au niveau de ces éléments. La colle élastomère peut être une colle appliquée à température ambiante. Cette mesure de l'invention est intéressante pour réduire le coût de l'assemblage. Le tablier avant 8, les côtés de caisse 12 et 12' ainsi que les doublures de custode 10 et 10' sont en l'occurrence des deuxièmes éléments. En particulier, le tablier avant, outre sont assemblage au plancher par de la colle thermo fusible, est assemblé à un élément du bloc avant du véhicule par de la colle élastomère. En particulier, les doublures de custode, outre leur assemblage au plancher par de la colle thermo fusible, sont assemblées aux côtés de caisse par de la colle élastomère. En particulier, les côtés de caisse outre leur assemblage aux doublures par de la colle élastomère sont assemblés aux longerons par de la colle thermo fusible.

La figure 2 est une vue schématique du type de colle employé entre les éléments de la caisse de véhicule automobile conforme à l'invention (voir nomenclature sur le dessin). On y voit en l'occurrence une représentation schématique de bandes de colle thermo fusible 15 (en trait gras sur l'image) et de bandes de colle élastomère 16 (en trait fin sur l'image). De gauche à droite sur l'image, et en ce qui concerne la colle thermo fusible, on peut voir en l'occurrence l'assemblage collé 18 entre le tablier avant et le plancher, les assemblages collés 20 et 20' entre les longerons et le plancher, les assemblages collés 22 et 22' entre chacun des côtés de caisse et le longeron correspondant, les assemblages collés 24 et 24' entre les doublures de custodes et le plancher. Toujours de gauche à droite sur l'image, et en ce qui concerne la colle élastomère, on peut voir l'assemblage collé 26 entre le tablier avant et un élément du bloc avant, les assemblages collés 28 et 28' entre chacun des côtés de caisse et la doublure de custode correspondante. Le plan « P » à hauteur des pare-chocs est aussi ici représenté, il permet d'observer les assemblage collés à la colle thermo fusibles 18, 20, 20', 22, 22', 24 et 24' des premiers éléments qui sont en l'occurrence situés au-dessous du niveau des pare chocs et susceptible de recevoir des chocs en cas de collision ainsi que les assemblages collés à la colle élastomère 26, 28, 28' des portions des deuxièmes éléments qui sont en l'occurrence situées au-dessus du niveau des pare chocs. Les assemblages collés ici mentionnés sont des assemblages collés principaux de la caisse de véhicule automobile. Ils ne correspondent pas cependant à une liste exhaustive des assemblages collés de la caisse.

## Revendications

1. Caisse de véhicule automobile (2), comprenant des éléments de tôles assemblés les uns aux autres, **caractérisé en ce que**
les éléments de tôle comprennent un ou plusieurs premiers éléments assemblés par de la colle thermo fusible (15) ; et
les éléments de tôle comprennent des deuxièmes éléments assemblés par de la colle élastomère (16).

2. Caisse de véhicule (2) selon la revendication 1, **caractérisé en ce que** les premiers éléments sont des éléments structurels de la caisse susceptibles de subir des chocs en cas de collision.

3. Caisse de véhicule (2) selon l'une des revendications 1 et 2, **caractérisé en ce que** les premiers éléments sont des éléments structurels de la caisse situés à hauteur ou au-dessous des pare-chocs.

4. Caisse de véhicule (2) selon l'une des revendications 1 à 3, **caractérisé en ce qu'**elle comprend un plancher (4) et des longerons (6, 6') de part et d'autre, latéralement, audit plancher, les premiers éléments comprenant ledit plancher et/ou lesdits longerons.

5. Caisse de véhicule (2) selon l'une des revendications 1 à 4, **caractérisé en ce que** les deuxièmes éléments comprennent une ou plusieurs portions situées à hauteur ou au-dessus des pare-chocs.

6. Caisse de véhicule (2) selon l'une des revendications 1 à 5, **caractérisé en ce qu'**elle comprend un plancher (4) et des doublures de custodes (10, 10') de part et d'autre, latéralement, audit plancher, les deuxièmes éléments comprenant lesdites doublures de custode.

7. Caisse de véhicule (2) selon l'une des revendications 1 à 6, **caractérisé en ce qu'**elle comprend un plancher (4) et un tablier avant (8) à l'avant dudit plancher, les deuxièmes éléments comprenant ledit tablier avant.

8. Caisse de véhicule (2) selon l'une des revendications 1 à 7, **caractérisé en ce qu'**elle comprend un plancher (4), des doublures de custode (10, 10') de part et d'autre, latéralement, audit plancher, des côtés de caisse (12, 12') en vis-à-vis des doublures de custode, les deuxièmes éléments comprenant lesdits côtés de caisse.

9. Caisse de véhicule (2) selon l'une des revendications 1 à 8, **caractérisé en ce que** la colle thermo fusible (15) est une colle à résines époxydes appliquée à chaud, et la colle élastomère (16) est une colle appliquée à température ambiante.

10. Caisse de véhicule (2) selon l'une des revendications 1 à 9, **caractérisé en ce que** la colle thermo fusible (15) présente une énergie de rupture à température ambiante supérieure, préférentiellement au moins trois fois supérieure, à celle de la colle élastomère (16).

11. Caisse de véhicule (2) selon l'une des revendications 1 à 10, **caractérisé en ce que** les longerons (6, 6') sont assemblés aux côtés de caisse par de la colle thermo fusible.

12. Caisse de véhicule (2) selon l'une des revendications 1 à 11, **caractérisé en ce que** le plancher (4) est assemblé au tablier avant (8) par de la colle thermo fusible.

13. Caisse de véhicule (2) selon l'une des revendications 1 à 912, **caractérisé en ce que** le tablier avant (8) est assemblé à un élément du bloc avant du véhicule par de la colle élastomère.

14. Caisse de véhicule (2) selon l'une des revendications 1 à 13, **caractérisé en ce que** la caisse comprend un pavillon s'étendant entre les côtés de caisse, ledit pavillon étant assemblé aux côtés de caisse par de la colle thermo fusible.

15. Caisse de véhicule (2) selon l'une des revendications 1 à 14, **caractérisé en ce que** la colle est appliquée sur au moins un bord d'un élément destiné à être juxtaposé à un autre bord d'un autre élément de sorte à former une feuillure de jonction.

## Patentansprüche

1. Kraftfahrzeugkarosserie (2), die Blechelemente umfasst, die aneinander angebaut sind, **dadurch gekennzeichnet, dass**
die Blechelemente ein oder mehrere Blechelemente umfassen, die durch wärmeschmelzbaren Kleber (15) aneinandergebaut sind; und
die Blechelemente zweite Elemente umfassen, die durch Elastomerkleber (16) aneinandergebaut sind.

2. Fahrzeugkarosserie (2) nach Anspruch 1, **dadurch gekennzeichnet, dass** die ersten Elemente Strukturelemente der Karosserie sind, die im Fall eines Aufpralls Stöße erfahren können.

3. Fahrzeugkarosserie (2) nach einem der Ansprüche 1 und 2, **dadurch gekennzeichnet, dass** die ersten Elemente Strukturelemente der Karosserie sind, die in der Höhe oder unterhalb der Stoßfänger liegen.

4. Fahrzeugkarosserie (2) nach einem der Ansprüche 1 bis 3, **dadurch gekennzeichnet, dass** sie einen Fußboden (4) und Längsträger (6, 6') zu beiden Seiten seitlich an dem Boden umfasst, wobei die ersten Elemente den Fußboden und/oder die Längsträger umfassen.

5. Fahrzeugkarosserie (2) nach einem der Ansprüche 1 bis 4, **dadurch gekennzeichnet, dass** die zweiten Elemente einen oder mehrere Abschnitte umfassen, die in der Höhe oder oberhalb der Stoßfänger liegen.

6. Fahrzeugkarosserie (2) nach einem der Ansprüche 1 bis 5, **dadurch gekennzeichnet, dass** sie einen Fußboden (4) und Auskleidungen des Karosserieteils über dem Hinterrad (10, 10') zu beiden Seiten seitlich an dem Fußboden umfassen, wobei die zweiten Elemente die Auskleidungen des Karosserieteils über dem Hinterrad umfassen.

7. Fahrzeugkarosserie (2) nach einem der Ansprüche 1 bis 6, **dadurch gekennzeichnet, dass** sie einen Fußboden (4) und ein vorderes Umlaufblech (8) an der Vorderseite des Fußbodens umfasst, wobei die zweiten Elemente das vordere Umlaufblech umfassen.

8. Fahrzeugkarosserie (2) nach einem der Ansprüche 1 bis 7, **dadurch gekennzeichnet, dass** sie einen Fußboden (4), Auskleidungen des Karosserieteils über dem Hinterrad (10, 10') zu beiden Seiten seitlich des Bodens, Karosserieseiten (12, 12') in Gegenüberlage der Auskleidung den des Karosserieteils über dem Hinterrad umfasst, wobei die zweiten Elemente die Karosserieseiten umfassen.

9. Fahrzeugkarosserie (2) nach einem der Ansprüche 1 bis 8, **dadurch gekennzeichnet, dass** der wärmeschmelzbare Kleber (15) ein Kleber mit Epoxidharzen ist, der warm aufgetragen wird, und dass der Elastomerkleber (16) ein Kleber ist, der bei Raumtemperatur aufgetragen wird.

10. Fahrzeugkarosserie (2) nach einem der Ansprüche 1 bis 9, **dadurch gekennzeichnet, dass** der wärmeschmelzbare Kleber (15) eine Bruchenergie bei Raumtemperatur aufweist, die größer, bevorzugt mindestens 3 Mal größer, als diejenige des Elastomerklebers (16) ist.

11. Fahrzeugkarosserie (2) nach einem der Ansprüche 1 bis 10, **dadurch gekennzeichnet, dass** die Längsträger (6, 6') an den Karosserieseiten durch den wärmeschmelzbaren Kleber angebaut sind.

12. Fahrzeugkarosserie (2) nach einem der Ansprüche 1 bis 11, **dadurch gekennzeichnet, dass** der Fußboden (4) an die vordere Umlaufwand (8) durch wärmeschmelzbaren Kleber angebaut ist.

13. Fahrzeugkarosserie (2) nach einem der Ansprüche 1 bis 12, **dadurch gekennzeichnet, dass** das vordere Umlaufblech (8) an ein Element des Frontblocks des Fahrzeugs durch Elastomerkleber angebaut ist.

14. Fahrzeugkarosserie (2) nach einem der Ansprüche 1 bis 13, **dadurch gekennzeichnet, dass** die Karosserie einen Himmel umfasst, der sich zwischen den Karosserieseiten erstreckt, wobei der Himmel an die Karosserieseiten durch wärmeschmelzbaren Kleber angebaut ist.

15. Fahrzeugkarosserie (2) nach einem der Ansprüche 1 bis 14, **dadurch gekennzeichnet, dass** der Kleber auf mindestens einen Rand eines Elements aufgetragen wird, das dazu bestimmt ist, an einem anderen Rand eines anderen Elements derart nebeneinander zu liegen, dass ein Anschlussfalz gebildet wird.

## Claims

1. A motor vehicle body (2), including sheet metal elements assembled to one another, **characterized in that**
the sheet metal elements include one or more first elements assembled by hot-melt adhesive (15); and
the sheet metal elements include second elements assembled by elastomer adhesive (16).

2. The vehicle body (2) according to Claim 1, **characterized in that** the first elements are structural elements of the body which are capable of sustaining impacts in the event of collision.

3. The vehicle body (2) according to one of Claims 1 and 2, **characterized in that** the first elements are structural elements of the body situated at the height of or below the bumpers.

4. The vehicle body (2) according to one of Claims 1 to 3, **characterized in that** it includes a floor (4) and side members (6, 6') on either side, laterally, of said floor, the first elements including said floor and/or said side members.

5. The vehicle body (2) according to one of Claims 1 to 4, **characterized in that** the second elements include one or more portions situated at the height of or above the bumpers.

6. The vehicle body (2) according to one of Claims 1 to 5, **characterized in that** it includes a floor (4) and quarter light trims (10, 10') on either side, laterally, of said floor, the second elements including said quarter light trims.

7. The vehicle body (2) according to one of Claims 1 to 6, **characterized in that** it includes a floor (4) and a front panel (8) at the front of said floor, the second elements including the said front panel.

8. The vehicle body (2) according to one of Claims 1 to 7, **characterized in that** it includes a floor (4), quarter light trims (10, 10') on either side, laterally, of said floor, body sides (12, 12') facing the quarter light trims, the second elements including said body sides.

9. The vehicle body (2) according to one of Claims 1 to 8, **characterized in that** the hot-melt adhesive (15) is an adhesive of epoxy resins which is applied hot, and the elastomer adhesive (16) is an adhesive which is applied at ambient temperature.

10. The vehicle body (2) according to one of Claims 1 to 9, **characterized in that** the hot-melt adhesive (15) has a fracture energy at ambient temperature which is greater, preferably at least three times greater, than that of the elastomer adhesive (16).

11. The vehicle body (2) according to one of Claims 1 to 10, **characterized in that** the side members (6, 6') are assembled at the sides of the body by hot-melt adhesive.

12. The vehicle body (2) according to one of Claims 1 to 11, **characterized in that** the floor (4) is assembled to the front panel (8) by hot-melt adhesive.

13. The vehicle body (2) according to one of Claims 1 to 12, **characterized in that** the front panel (8) is assembled to an element of the front end of the vehicle by elastomer adhesive.

14. The vehicle body (2) according to one of Claims 1 to 13, **characterized in that** the body includes a roof extending between the body sides, said roof being assembled to the body sides by hot-melt adhesive.

15. The vehicle body (2) according to one of Claims 1 to 14, **characterized in that** the adhesive is applied on at least one edge of an element intended to be juxtaposed to another edge of another element so as to form a joining rebate.
